(19) **Europäisches Patentamt**
**European Patent Office**
**Office européen des brevets**

(11) **EP 1 971 075 B1**

(12) **EUROPEAN PATENT SPECIFICATION**

(45) Date of publication and mention
of the grant of the patent:
**29.12.2010 Bulletin 2010/52**

(51) Int Cl.:
***H04L 29/08*** *(2006.01)* ***G06Q 30/00*** *(2006.01)*

(21) Application number: **06840852.5**

(86) International application number:
**PCT/CN2006/003822**

(22) Date of filing: **31.12.2006**

(87) International publication number:
**WO 2007/076723 (12.07.2007 Gazette 2007/28)**

(54) **AN INFORMATION ISSUING SYSTEM, A PUBLIC MEDIA INFORMATION ISSUING SYSTEM AND AN ISSUING METHOD**

INFORMATIONSAUSGABESYSTEM, ÖFFENTLICHES MEDIEN-INFORMATIONSAUSGABESYSTEM UND AUSGABEVERFAHREN

SYSTÈME DE TRANSMISSION D'INFORMATIONS, SYSTÈME DE TRANSMISSION PUBLIQUE D'INFORMATIONS MULTIMÉDIA ET PROCÉDÉ DE TRANSMISSION

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.12.2005 CN 200510137823**

(43) Date of publication of application:
**17.09.2008 Bulletin 2008/38**

(73) Proprietor: **Huawei Technologies Co., Ltd.**
**Longgang District, Shenzhen**
**Guangdong 518129 (CN)**

(72) Inventors:
• **SHAO, Gang**
**Shenzhen Guangdong 518129 (CN)**

• **ZHONG, Jieping**
**Shenzhen Guangdong 518129 (CN)**
• **MO, Caiwen**
**Shenzhen Guangdong 518129 (CN)**
• **ZHANG, Qingjie**
**Shenzhen Guangdong 518129 (CN)**

(74) Representative: **Thun, Clemens**
**Mitscherlich & Partner**
**Patent- und Rechtsanwälte**
**Sonnenstrasse 33**
**80331 München (DE)**

(56) References cited:
**EP-A- 1 199 899    WO-A-03/009630**
**WO-A1-02/03209    CN-A- 1 522 414**
**JP-A- 2003 242 169    US-A1- 2004 199 631**
**US-A1- 2005 017 072**

## Description

**FIELD OF THE INVENTION**

The present disclosure relates to a communication technique field, and more particularly to an information issuing system, a public media information issuing system and an issuing method.

**BACKGROUND**

Currently, more and more public places are installed with a public media information issuing system, which stores information to be issued in advance, for example, text, image, and other multimedia programs (e.g., advertisements, news, programs, etc), and plays the information to be issued through a medium such as a CRT TV set, a plasma TV set, an LED display, an LCD, and a speaker device.

The available public media information issuing system needs to store the information to be issued in advance, and the information to be issued may be stored in advance according to the environment of the playing site. Mostly the stored information is sequentially looped one piece by another in the issuing. As for users, they merely passively accept the information. Some other public media information issuing systems adopt an interactive technique to perform simply interactions with the user through adopting a touch screen or providing a keyboard or another input device to the user, so as to issue the information selected by the user according to the input of the user. However, as for the public media information issuing system, the mobility of users who read/listen to the issued information is quite high, and the time for the user to stay there is rather limited, so that the user can only read/listen to a small part of the program. However, such interactive method costs much time, and may not accurately and quickly locate the content and information which the user is interested in. As for operators providing the content to the public media information issuing system, it is difficult to achieve the expected benefit.

EP 1 199 899 A1 discloses a method and an apparatus for providing a user of a mobile communication terminal or a group of users with a time-dependent information message. The location of the mobile communication terminal is determined. A user profile of the user or the group of users is determined. A content of the information message is generated according to the determined user profile and according to the current time. The information message is provided to the user or the group of users.

**SUMMARY**

Accordingly, the present disclosure is mainly directed to provide an information issuing system according to claim 1 and issuing method according to claim 7, which are suitable for locating information which the user is interested in and issuing the information to the user fast and expediently.

The present disclosure provides a public media information issuing system, which includes a user ID receiving unit, a user data collecting unit, a play controlling unit, and a media playing unit.

The user ID receiving unit is adapted to collect user IDs of users who enter the service region of the public media information issuing system.

The user data collecting unit is adapted to acquire behavior character information of the users according to the user IDs.

The play controlling unit is adapted to integrate the behavior character information of all the users in the service region into integrated behavior character information, and select information to be issued from stored information according to the integrated behavior character information.

The media playing unit is adapted to issue the selected information.

The present disclosure further provides an information issuing method, which includes the following steps: collecting user IDs of users who enter a service region of a public media information issuing system; acquiring behavior character information corresponding to the user IDs; integrating the behavior character information of all the users in the service region into integrated behavior character information, and selecting corresponding information to be issued according to a certain rule after the integration; and issuing the selected information.

As can be known from the above descriptions that, in the technical solution provided by the embodiment of the present disclosure, surfing activities, subscription of telecommunication services, and other information of the user are collected, and information which the user is interested in is analyzed. When the user carrying a mobile terminal approaches or uses the public media information issuing system, the ID of the mobile terminal is identified, and the information which the user is interested in is located according to the relationship between the user and the ID of the mobile terminal. Based on the information interested by the user, the public media information issuing system selects and issues the stored information to the user, so as to offer the most urgently needed and concentrated content and service information to the user. Furthermore, the present disclosure may make statistics on all the users who enter the service region, so as to select and issue the same content interested by most of the users. In this manner, the present disclosure may locate the information which most of the users in the service region are interested in fast and expediently, so as to increase the pertinency of the public media issuance, and thereby improving the validity of the media content issuing.

## BRIEF DESCRIPTION OF THE DRAWINGS

Figure 1 is a schematic view of an information issuing system according to a first exemplary embodiment of the present disclosure;

Figure 2 is a schematic structural view of a play controlling unit according to a second exemplary embodiment of the present disclosure;

Figure 3 is a schematic view of an information issuing system according to a third exemplary embodiment of the present disclosure;

Figure 4 is a schematic view of a structure of data stored in a data storing unit according to an exemplary embodiment of the present disclosure; and

Figure 5 is a flow chart of controlling to play the information to be issued according to an exemplary embodiment of the present disclosure.

## DETAILED DESCRIPTION

The communication service has become an indispensable part in the current social life, and people cannot get rid of the communication network, for example, making calls, sending short messages, subscribing news, sending or receiving E-mails, surfing over Internet, and online shopping. In an embodiment of the present disclosure, the behavior character information of a user on the communication network is recorded for being analyzed, and the preference and behavior character of the user on the network behavior are analyzed and recorded according to the behavior character of the user. The analysis result basically reflects the preference and behavior character of the user in real life.

When a user enters a service region of a public media information issuing system, according to behavior character information of the user in network, the preference and behavior character of the user are acquired, that is, the content and information which the user is interested in are analyzed. The content and information which most users in the service region are similarly interested in may be acquired through statistics, and the corresponding information stored by the corresponding public media information issuing system is selected and issued to the users, so as to provide a suitable information service for a specific group of audience. The public media information issuing system differentiates different users through the user IDs for uniquely identifying the users, and associates with the recorded behavior character information of the user in network through the user ID. For example, it may differentiate one user from another through the ID of the mobile terminal carried by the user (for example, an international mobile subscriber identify (IMSI) in a SIM card), and it may associate the ID of the mobile terminal of the user with the recorded behavior character information of the user in network. When the user enters the service region of the public media information issuing system, the user is identified according to the ID of the mobile terminal carried by the user, and the behavior character information in the corresponding network is further associated through the ID of the mobile terminal, so as to acquire the preference and behavior character of the user. In the following embodiment, different users are, for example, differentiated by the IDs of mobile terminals carried by the users.

The present disclosure further provides an information issuing system, and the information issuing system at least includes a public media information issuing system. The public media information issuing system is adapted to select and play information to be issued according to the behavior character information of the user. The public media information issuing system includes a user ID receiving unit, a user data collecting unit, a play controlling unit, and a media playing unit.

In addition, the information issuing system further includes a user data management system adapted to provide the behavior character information of the user. The user data management system may be a user service database that saves the user service data, and may also be a service fingerprint system that automatically generates the behavior character of the user.

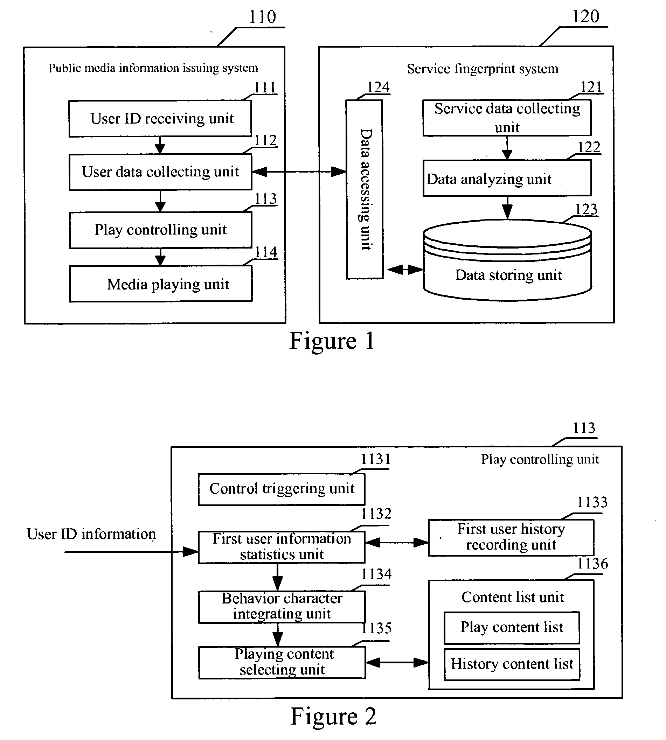

Figure 1 is a schematic view of a system structure according to a first exemplary embodiment of the present disclosure.

As shown in Figure 1, the system in this embodiment includes a public media information issuing system 110 and a service fingerprint system 120. The public media information issuing system 110 includes a user ID receiving unit 111, a user data collecting unit 112, a play controlling unit 113, and a media playing unit 114, which are described below in detail.

The user ID receiving unit 111 is adapted to acquire user ID information of a mobile terminal carried by a user who enters a service region of the public media information issuing system 110 and provide the user ID information to the user data collecting unit 112.

The user data collecting unit 112 acquires the behavior character information of the user through interaction with the service fingerprint system 120 according to the user ID and provides the behavior character information to the play controlling unit 113. The behavior character information of the user may also be acquired from the user service database that saves the user service data.

The play controlling unit 113 suitably selects information to be issued from stored information according to the behavior character information of the user to generate a play content list, and delivers the information selected to the media playing unit 114 for being played. The statistics manner may be adopted, that is, making statistics on the behavior character information of all the users in the service region in a certain time period, comprehensively analyzing the integrated behavior character information of all the users, and selecting the information to be issued accordingly. The information to be issued may be stored in a local server or remote server before hand.

The media playing unit 114 issues corresponding information according to the play content list provided by the play controlling unit 113, and plays the corresponding information in a form of broadcasting and stream media etc.

The public media information issuing system may further records service information of a served user who enters the service region, for example, service duration, frequency, and issued information of the service for the served user (merely the ID corresponding to the information is recoded). According to the above record, it may obtain the user ID of the user requiring the service through statistics (i.e. the ID of the user whose behavior character information needs to be analyzed). For example, as for the users with sufficient long service duration and sufficient high service frequency, it can be considered that the users are quite familiar with the issued information. Thus, when the behavior character information of the users is analyzed, those users can be omitted. The above statistics function may also be realized in the play controlling unit 113. Particularly, the statistics is made before the play controlling unit 113 selects the information to be issued according to the behavior character information of the user, and the behavior character information of the served user obtained through statistics is integrated. Figure. 2 is a schematic structural view of a play controlling unit according to a second exemplary embodiment. Referring to Figure 2, the play controlling unit 113″ includes a first user information statistics unit 1132, a first user history recording unit 1133, a behavior character integrating unit 1134, a playing content selecting unit 1135, a content list unit 1136, and a control triggering unit 1131, which are described below in detail.

The first user information statistics unit 1132 is adapted to receive the user ID information and the corresponding behavior character information, analyze the user history record in the first user history recording unit 1133 (i.e. the ID information and the corresponding service information of the served user), determine the service weight of the user, make statistics on the ID information of the served user according to the service weight, and send the user ID obtained through statistics and corresponding behavior character information and the service weight to the behavior character integrating unit 1134. The service weight may be relevant to the service duration and/or service frequency of the user, and is adapted to integrate the behavior character of the user. For example, the longer the service duration is, or the higher the service frequency is, the greater the service weight is, the higher concern degree of the user on the public media information issuing system 110 is. Once the service weight exceeds a certain threshold, it indicates that the service duration or the service frequency of the user is sufficiently high, and the user is considered to have already read or be familiar with the issued information, so that such user is not taken into consideration when making statistics. In addition, the unit is further adapted to update the information of the first user history recording unit 1133. For example, when the user ID information is received, times (i.e. frequency) of accessing the user ID information are modified in the first user history recording unit 1133. The service duration is updated when the user ID information is received once again, in which the service duration is a time interval between the current time for receiving the user ID information and the next time for receiving the user ID information (i.e. the time interval for collecting the user ID by the user ID receiving unit 111).

The first user history recording unit 1133 is adapted to record the user ID information and the corresponding service information of the served user, for example, the service duration, service frequency, issued information (merely the ID corresponding to the information is recorded) in the service of the served user. The information in the first user history recording unit 1133 is updated by the first user information statistics unit 1132 after making statistics each time.

The behavior character integrating unit 1134 is adapted to perform weight integration according to the behavior character information and the service weight of the served user obtained through statistics. Alternatively, the statistics integration may be implemented on all the users in the service region, so as to obtain the integrated behavior character information in the current service region. The algorithm that may be adopted is exemplified below.

Assuming that there is a user A and a user B in the service region, the behavior character information of the user A and the user B in m dimensions (which may be regarded as m classes) are respectively {A1, A2, ..., Am} and {B1, B2, ..., Bm}, and the service weights thereof are respectively a and b, the integrated behavior character information is:

$$SUM1 = (a \times A1 + b \times B1)$$

$$SUM2 = (a \times A2 + b \times B2)$$

$$\ldots$$

$$SUMm = (a \times Am + b \times Bm).$$

The result is represented as {SUM1, SUM2, ..., SUMm}, which represents the integrated behavior character information in m dimensions. Definitely, other algorithms may also be adopted for statistics.

The control triggering unit 1131 is adapted to trigger the selection of the playing content. When a rule set in the control triggering unit 1131 is satisfied, the control triggering unit 1131 triggers the playing content selecting unit 1135 to set the play content list of the content list unit 1136, and the control triggering unit 1131 may be a time trigger (automatically triggers in a time period) or an event trigger (triggers after detecting that all the content in the play list is played). The control triggering unit 1131 may also be adapted to trigger the user ID receiving unit 111 to start to collect the user ID.

The playing content selecting unit 1135 takes the decision tree or another mathematics statistic analyzing method as a content selection policy model to analyze the most matched information to be issued according to the integrated behavior character information, sorts the information to be issued according to the matching degree, and records the matched information to be issued into the play content list of the content list unit 1136 (merely the ID corresponding to the information is recorded). For example, the current integrated characters commonly focus on the sports and basketball, so that the ID of the information to be issued with most similar characters matched with the sports and basketball is added into the play content list, and is played by the media playing unit 114.

The content list unit 1136 stores the list of all the contents for being played, and further includes a play content list for recording the information to be played (including the multimedia video content, text content, and music content) selected by the playing content selecting unit 1135, or the address or ID corresponding to the information. Each piece of information to be issued has a certain property (or in the form of key words), and the property is used to describe the class item of the playing content. The property values may be one or more behavior character information, which are, for example, listed below.

The behavior character information in the property of the information 1 to be issued includes sports, basketball, and Jordan.

The behavior character information in the property of the information 2 to be issued includes education, foreign language, and listening.

The behavior character information in the property of the information 3 to be issued includes entertainment and variety show.

The content list unit 1136 further includes a history list, which records the IDs of the played information. The information played recently is recorded into the list, so as not to repeatedly play the played information in a certain time period. The history content list is cleared, once the contents thereof exceed a certain proportion of the total content or exceed a certain time limit.

The play controlling unit 113 is exemplified below. Assuming that the user A likes sports, usually visits the web sites about sports over Internet, enjoys playing sports games, especially basketball, and likes watching the entertainment programs, the service fingerprint system 120 analyzes that the behavior character information of the user A is sports and entertainment. It is further assumed that the current public media information issuing system 110 stores three information to be issued as described above. When the user A enters the service region, the information to be issued is matched according to the behavior character information, the matching result is sorted as {information 1, information 3, and information 2}, and then the information is put into the play content list according to such an order for being played in sequence. After all the content has been played, it is put into the history content list. Assuming that the user B who likes the physical education and the foreign language also enters the service region, by integrating the behavior characters of the users A and B, the information is further sorted according to the common behavior character information, and then the information to be issued is matched, and the matching result is sorted into {information 1, information 2, and information 3}. Therefore, the playing information may satisfy the preference of most of the users in the service region.

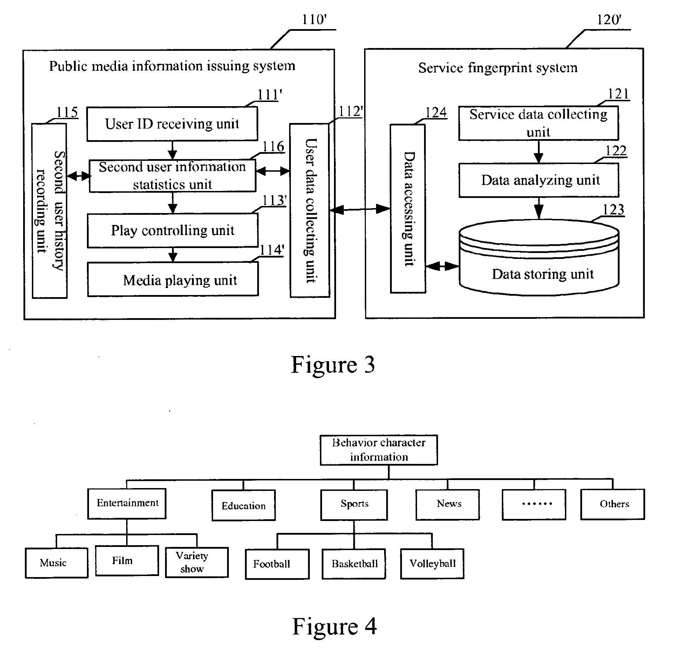

Definitely, the statistics may be made before the user data collecting unit 112 collects the behavior character information of the user. The user data collecting unit 112 acquires the behavior character information of users according to the user IDs of the users requiring the service obtained through statistics. Figure 3 is a schematic view of a system structure according to a third exemplary embodiment of the present disclosure. Referring to Figure 3, the system in this embodiment includes a public media information issuing system 110' and a service fingerprint system 120'. The public media information issuing system 110' includes a user ID receiving unit 111', a user data collecting unit 112', a play controlling unit 113', and a media playing unit 114', a second user history recording unit 115, and a second user information statistics unit 116, which are described below in detail.

The user ID receiving unit 111' is adapted to acquire user ID information of a mobile terminal carried by a user who enters the service region of the public media information issuing system 110', and provide the user ID information to the second user information statistics unit 116.

The second user history recording unit 115 is adapted to record user ID information and corresponding service information of a served user. The information in the second user history recording unit 115 updated by the second user information statistics unit 116 each time after the statistics process.

The second user information statistics unit 116 is adapted to receive the user ID information from the user ID receiving unit 111', make statistics on ID information of the served user according to the service information recorded in the user history recording unit 115, and send the user ID obtained through statistics to the user data collecting unit 112'. In addition, the unit is further adapted to update the information of the second user history recording unit 115.

The user data collecting unit 112' interacts with the service fingerprint system 120' to acquire the behavior character information of the user according to the received user ID, and provides the behavior character information to the play controlling unit 113'. The behavior character information of the user may also be obtained from the user service database for saving the user service data.

The play controlling unit 113' suitably selects the information to be issued from stored information through a matching process according to the received behavior character information of the user, so as to generate a play content list, and delivers the play content list to the media playing unit 114' for being played. The statistics manner may be adopted, that is, making statistics on the behavior character information of all the users in the service region in a certain time period, comprehensively analyzing the integrated behavior character information of all the users, and then selecting the information to be issued accordingly. The information to be issued may be stored in a local server or remote server beforehand.

The media playing unit 114' issues the corresponding information according to the play content list provided by the play controlling unit 113', and plays the information in the form of broadcasting and stream media etc.

Referring to Figure 1, the service fingerprint system 120 in the first exemplary embodiment of the present disclosure is introduced. The service fingerprint system 120 is adapted to collect and analyze the behavior data of the user in the communication, and make statistics on the behavior character information of the user, so as to provide the behavior character information to the public media information issuing system 110. The service fingerprint system 120 includes:

a service data collecting unit 121, adapted to record content information of services used by the user when the user uses different services, for example, age, gender, subscribed services (for example, services subscribed through mobile phone, sports news subscribed when registering a mail box), average currency sum consumed each month, current location, and web sites frequently browsed by the user, and then send the collected information to a data analyzing unit 122 in a certain format, where a plurality of service data collecting units 121 may be provided and the service data collecting units 211 may be distributed on application servers, terminals, and other network equipments of the network;

the data analyzing unit 122, adapted to receive the information of the services used by the user reported by each service data collecting unit 121, analyzes the behavior character information of the user (or called service fingerprint of the user) by means of key words, and provide the behavior character information to a data storing unit 123 for being stored therein;

the data storing unit 123, adapted to store the behavior character information of the user. Different users are differentiated according to different user IDs. Because each user uses a variety of services, for example, mobile voice service, mobile data service, broadband service ,etc.. The existing number of the mobile terminal for the user may be used to identity each different user;

a data accessing unit 124, adapted to access, in response to an external request for accessing the service fingerprint system 120, the data storing unit 123 to acquire the behavior character information of the user, and return the behavior character information according to the external request.

The structure of the service fingerprint system 120 and the method for collecting and generating the behavior character information of the user have been described in detail in the patent entitled "User Business Behavior Characteristic Collecting System and Method", applied by the same applicants, which thus are not further described in detail in the present disclosure. In addition, the service fingerprint system 120' of the second exemplary embodiment is the same as the service fingerprint system 120 of the first exemplary embodiment, so it is not described in detail herein.

The process for realizing the present disclosure is described below in detail through an exemplary embodiment.

First, the service fingerprint system collects, analyzes, and stores the behavior character information of the user, which includes the following steps.

The service data collecting unit 121 collects corresponding data according to the content assigned to be collected in advance. For example, the collection is performed according to the used times, duration, frequency, and fee for the service used by the user.

The data analyzing unit 122 performs statistics analysis on the collected data, so as to acquire the behavior character information, obtain the importance degree of each piece of behavior character information of the user through statistics, that is, to sort the behavior character information. If the behavior character information occurs for many times, it indicates that such behavior character information is more important. Then, the behavior character information is stored in the data storing unit123. Figure 4 is a schematic view of a data storing format of a part of the behavior character information according to an embodiment of the present disclosure. The behavior character information of the user may be stored in a tree structure, in which a primary sub node is, for example, entertainment, education, sports, and news, which is the primary classification of the behavior character of the user. Each primary sub node includes several secondary sub nodes, which are further detailed classification of the behavior character. In order to show the users' concern degree on certain behavior character item, the greater the behavior character value is, the higher the concern degree is. Here, the service fingerprint system is described briefly; the analyzing process thereof may be achieved on the basis of the statistics manner, or a data mining manner.

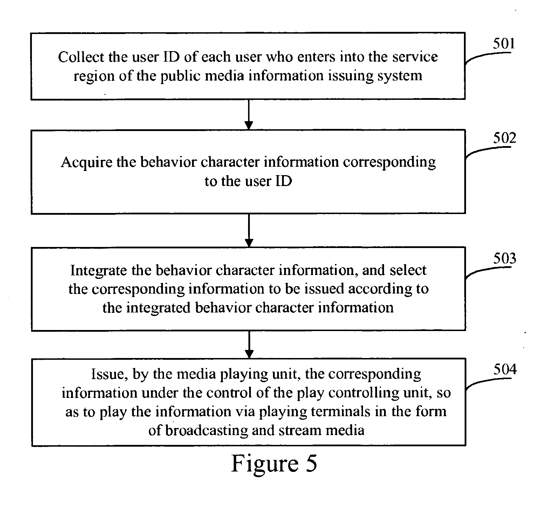

When the public media information issuing system issues the information, Figure 5 is a schematic view of a processing flow according to an exemplary embodiment of the present disclosure, which includes the following steps.

Block 501, the user ID of each user who enters the service region of the public media information issuing system is collected.

The ID of the mobile terminal carried by the user is received by the user ID receiving unit 111, so as to identify the user who enters the service region.

The receiving and identifying of the user ID may be realized through a close-range positioning or a long-range positioning technique.

In the close-range positioning, the user operates the mobile terminal to actively send the ID information to the public media information issuing system, or the mobile terminal automatically sends the ID information to the user ID receiving unit 111, once the user enters the service region (a scope where the user ID receiving unit 111 can be detected by a close-range transceiver device on the mobile terminal), or when the user ID receiving unit 111 detects that the mobile terminal enters the service region (the scope where the mobile terminal can be detected by a close-range transceiver device on the user ID receiving unit 111), the user ID receiving unit 111 requests the user ID information from the user terminal.

The user ID receiving unit 111 may be located on a certain multimedia playing terminal, and the close-range transceiver device may be a radio frequency (RF) transceiver device, a blue tooth transceiver device, an infrared transceiver device, a sound transceiver device, or an image transceiver device. The mobile terminal may be equipped with a corresponding transceiver device, so as to realize the information transmission there-between.

The user may control whether to send the user ID or not through a certain corresponding key on the mobile terminal, which includes the following steps. The user actuates an ID on the mobile terminal by pressing a certain key to send a client program. After encrypting the user ID, the close-range transceiver device on the mobile terminal sends the user ID to the user ID receiving unit 111. The user ID receiving unit 111 receives and decrypts the user ID to acquire the user information, and displays corresponding hello information to the user. The mobile terminal may prompt the user about the sending process in the form of texts and images.

If the mobile terminal automatically sends the user ID to the user ID receiving unit 111, when the user carrying along the mobile terminal enters the service region, after the mobile terminal detects the user ID receiving unit 111, the mobile terminal automatically sends the user ID. Alternatively, in response to certain request, the mobile terminal automatically sends the user ID to the user ID receiving unit 111, and particularly, when the user carrying the mobile terminal enters the service region, once the user ID receiving unit 111 detects the mobile terminal, the user ID receiving unit 111 automatically requests the user ID from the mobile terminal, and upon receiving the request, the mobile terminal automatically responds and sends the user ID to the user ID receiving unit 111. Because that any existing protocol can be used for data sending/requesting process, the specific information sending/requesting process is not described.

In the long-range positioning, for example, a GPS device is installed on the mobile terminal of the user. When the GPS positioning system detects that the mobile terminal enters the service region set by the public media information issuing system, the GPS positioning system informs the user ID to the user ID receiving unit 111 of the service region. The mobile terminal may be located by a location server, which is not described in detail.

It should be mentioned that, in the above manners, the process for sending the user ID may be encrypted. In addition, considering the situation that the mobile terminal automatically reports the user ID, in order to prevent the system from starting the information interacting process for many times to interact with the mobile terminal, it may be set to start this step only after the system detects that the mobile terminal has been stayed in the service region for longer than a certain time period. Alternatively, the public media information issuing system starts this step according to the playing situation (for example, the issuing of the current information has been finished, which may be obtained with reference to the descriptions about the play controlling unit 113.

Block 502, the behavior character information corresponding to the user ID is acquired.

The user data collecting unit 112 performs information interaction with the service fingerprint system according to the user ID, acquires the behavior character information of the user, and sends the behavior character information to the play controlling unit 113. The statistics may be further made on the received user ID before the behavior character information of the user is acquired, so as to select the ID information of the user requiring the service, and then the behavior character information of the user is acquired according to the ID information. The behavior character information of the users not requiring the service is not acquired. The statistics process is described below in detail.

According to the received user ID, it is determined whether the user is recorded in the history record, and if the user is recorded in the history record, it indicates that the statistics has been made on the user, and it does not need to analyze and integrate the behavior character information of the user (that is, the user does not require the service) any more. If the user is not recorded in the history record, the user is considered as requiring the service, and the behavior character information thereof is acquired. Definitely, it is only a simplest example to make statistics according to the history record. The statistics may be made through calculating the service weight of the user, as mentioned in the above description about the user information statistics unit 116. That is, during the determination process, it may calculate the service weight of the user according to the history record and the preset rules (for example, service duration or/and service frequency of the user), so as to determine whether to acquire the behavior character information of the user or not according to the weight.

Block 503, the behavior character information is integrated and the corresponding information to be issued is selected according to the integrated behavior character information.

In Block 502, if the statistics is not made before acquiring the behavior character information of the user, the statistics may be made before integrating the behavior character information of the user. The behavior character information of the user requiring the service is integrated when integrating the behavior character information of the user, and according to the integrated behavior character information of the user, the information to be issued is matched from the stored information, so as to dynamically generate the play content list and deliver the play content list to the media playing unit 114 for being issued. The information to be issued may be stored in a local server or in a remote server. The process for selecting the information to be issued is further described below in detail.

After the current information has been played, the behavior characters of all the users in the service region obtained through the current statistics are determined. First, the weight integration is performed on the character information of all the valid users (referring to the users determined to require the service in this embodiment), so as to obtain an integrated user character vector, which still includes the character dimensions of all the users. But, the value of each dimension is not a character value of a certain user, but an integrated character value. The content to be played is matched according to the integrated character value and put into the play content list, in which the matching manner may be an existing manner based on the decision tree or another statistics manner. If the information is included in the history content list, it represents that the information has been played, and the information is not put into the play content list.

Block 504, the media playing unit 114 issues the corresponding information under the control of the play controlling unit 113, so as to play the information in playing terminals in the form of broadcasting and stream media.

The played information the playing of which is finished is stored in the history content list of the play controlling unit 113, and is not played again within a certain time period.

Though illustration and description of the present disclosure have been given by reference to exemplary embodiments thereof, it should be appreciated by persons of ordinary skills in the art that various changes in forms and details can be made without deviation from the scope of this disclosure, which are defined by the appended claims.

## Claims

1. A public media information issuing system (110), comprising:

   a user ID receiving unit (111), adapted to collect user IDs of users who enter a service region of the public media information issuing system;
   a user data collecting unit (112), adapted to acquire behavior character information of the users according to the user IDs;
   a play controlling unit (113), adapted to integrate the behavior character information of all the users in the service region in a certain time period into integrated behavior character information, and select information interested by most of the users to be issued from stored information according to the integrated behavior character information; and
   a media playing unit (114), adapted to issue the selected information.

2. The system according to claim 1, wherein the play controlling unit (113) comprises:

   a first user history recording unit (1133), adapted to record user ID information and corresponding service information of a served user who enters the service region;
   a first user information statistics unit (1132), adapted to receive the user IDs of all the users in the service region and the corresponding behavior character information from the user data collecting unit, analyze the user ID information and the corresponding service information of the served user recorded in the first user history recording unit, determine the service weight of all the users in the service region, obtain the user ID of the served user requiring the service through statistics according to the service weight, and send the user ID of the served user and the corresponding behavior character information to a behavior character integrating unit (1134);
   the behavior character integrating unit (1134), adapted to integrate the behavior character information of the served user into the integrated behavior character information;
   a playing content selecting unit (1135), adapted to select information to be issued from stored information according to the integrated behavior character information and record the selected information into a content list unit (1136); and
   the content list unit (1136), adapted to record an ID of information to be issued and that of issued information.

3. The system according to claim 2, wherein the play controlling unit further comprises:

a control triggering unit (1131), adapted to trigger the playing content selecting unit to read the content list unit.

**4.** The system according to claim 1, wherein the public media information issuing system further comprises:

a user history recording unit (115), adapted to record user ID information and corresponding service information of served users who enter the service region; and

a user information statistics unit (116), adapted to receive the user IDs of all the users in the service region from the user ID receiving unit, obtain the user ID of the served user requiring the service through statistics according to the service information recorded in the user history recording unit, and send the user ID obtained through statistics to the user data collecting unit.

**5.** An information issuing system including a public media information issuing system as claimed in any one of claims 1 to 4, further comprising:

a user data management system, adapted to collect and record content information of services used by a user, and provide behavior character information of the user.

**6.** The information issuing system according to claim 5, wherein the user data management system is a service fingerprint system (120) which comprises:

a service data collecting unit (121), adapted to record information of services used by a user when the user uses different services;

a data analyzing unit (122), adapted to receive the information of services used by the user reported from each service data collecting unit, analyze the behavior character information of the user, and provide the analyzed behavior character information to a data storing unit (123) for being stored;

the data storing unit (123), adapted to store the behavior character information of the user; and

a data accessing unit (124), adapted to access the data storing unit to acquire the behavior character information of the user according to an external request for accessing the service fingerprint system, and return the behavior character information of the user according to the external request.

**7.** An information issuing method, comprising:

collecting (501) user IDs of users who enter a service region of a public media information issuing system (110);

acquiring (502) behavior character information corresponding to the user IDs;

integrating (503) the behavior character information of all the users in the service region in a certain time period into integrated behavior character information, and selecting corresponding information interested by most of the users to be issued according to the integrated behavior character information; and

issuing (504) the selected information.

**8.** The method according to claim 7, wherein before acquiring behavior character information, the method further comprising:

selecting ID information of users requiring the service from the collected user IDs of users according to the service information of the users; and

wherein acquiring behavior character information corresponding to the user IDs refers to acquiring the behavior character information corresponding to the selected ID information of the users requiring the service.

**9.** The method according to claim 7, wherein collecting a user ID of each user who enters a service region of a public media information issuing system comprises: sending, by the user, a user ID to the public media information issuing system, and recording, by the public media information issuing system, the received user ID.

**10.** The method according to claim 7, wherein collecting a user ID of each user who enters a service region of a public media information issuing system comprises: collecting the user ID through a mobile terminal carried by the user;

and the method further comprises: sending, by the mobile terminal, the user ID to the public media information issuing system, once the mobile terminal detects the public media information issuing system when entering the service region; and recording, by the public media information issuing system, the received user ID; or

further comprises: requesting, by the public media information issuing system, the user ID from the mobile terminal, once the public media information issuing system detects that the mobile terminal enters the service region; sending, by the mobile terminal, the user ID in response to the request; and recording, by the public media information issuing system, the received user ID; or

further comprises: acquiring the user ID corresponding to the mobile terminal and informing the public media information issuing system of the service region, when a locating system detects that the mobile terminal enters the service region; wherein the locating system comprises: a GPS system or a positioning server.

11. The method according to claim 7, wherein integrating the behavior character information of all the users in the service region into integrated behavior character information comprises:

performing weight integration on the behavior character information of all the users to obtain an integrated user character vector including the character dimensions of all the users.

**Patentansprüche**

1. Öffentliches Medieninformations-Ausgabesystem (110), umfassend:

eine Benutzer-ID-Empfangseinheit (111), die dafür ausgelegt ist, Benutzer-IDs von Benutzern zu sammeln, die in eine Dienstregion des öffentlichen Medieninformations-Ausgabesystems eintreten;
eine Benutzerdaten-Sammeleinheit (112), die dafür ausgelegt ist, Verhaltenscharakterinformationen der Benutzer gemäß den Benutzer-IDs zu beschaffen;
eine Wiedergabesteuereinheit (113), die dafür ausgelegt ist, die Verhaltenscharakterinformationen aller Benutzer in der Dienstregion in einem bestimmten Zeitraum zu integrierten Verhaltenscharakterinformationen zu integrieren und aus gespeicherten Informationen auszugebende Informationen von Interesse für die meisten der Benutzer gemäß den integrierten Verhaltenscharakterinformationen auszuwählen; und
eine Medienwiedergabeeinheit (114), die dafür ausgelegt ist, die gewählten Informationen auszugeben.

2. System nach Anspruch 1, wobei die Wiedergabesteuereinheit (113) Folgendes umfasst:

eine erste Benutzervorgeschichte-Aufzeichnungseinheit (1133), die dafür ausgelegt ist, Benutzer-ID-Informationen und entsprechende Dienstinformationen eines versorgten Benutzers, der in die Dienstregion eintritt, aufzuzeichnen;
eine erste Benutzerinformations-Statistikeinheit (1132), die dafür ausgelegt ist, die Benutzer-IDs aller Benutzer in der Dienstregion und die entsprechenden Verhaltenscharakterinformationen aus der Benutzerdaten-Sammeleinheit zu empfangen, die Benutzer-ID-Informationen und die entsprechenden Dienstinformationen des versorgten Benutzers, die in der ersten Benutzervorgeschichte-Aufzeichnungseinheit aufgezeichnet sind, zu analysieren, das Dienstgewicht aller Benutzer in der Dienstregion zu bestimmen, die Benutzer-ID des den Dienst erfordernden versorgten Benutzers durch Statistik gemäß dem Dienstgewicht zu erhalten und die Benutzer-ID des versorgten Benutzers und die entsprechenden Verhaltenscharakterinformationen zu einer Verhaltenscharakter-Integrationseinheit (1134) zu senden;
die Verhaltenscharakter-Integrationseinheit (1134), die dafür ausgelegt ist, die Verhaltenscharakterinformationen des versorgten Benutzers in die integrierten Verhaltenscharakterinformationen zu integrieren;
eine Wiedergabeinhalt-Auswahleinheit (1135), die dafür ausgelegt ist, aus gespeicherten Informationen auszugebende Informationen gemäß den integrierten Verhaltenscharakterinformationen auszuwählen und die ausgewählten Informationen in einer Inhaltslisteneinheit (1136) aufzuzeichnen; und
die Inhaltslisteneinheit (1136), die dafür ausgelegt ist, eine ID von auszugebenden Informationen und die von ausgegebenen Informationen aufzuzeichnen.

3. System nach Anspruch 2, wobei die Wiedergabesteuereinheit ferner Folgendes umfasst:

eine Steuertriggereinheit (1131), die dafür ausgelegt ist, die Wiedergabeinhalt-Auswahleinheit zu triggern, die Inhaltslisteneinheit zu lesen.

4. System nach Anspruch 1, wobei das öffentliche Medieninformations-Ausgabesystem ferner Folgendes umfasst:

eine Benutzervorgeschichte-Aufzeichnungseinheit (115), die dafür ausgelegt ist, Benutzer-ID-Informationen und entsprechende Dienstinformationen versorgter Benutzer, die in die Dienstregion eintreten, aufzuzeichnen; und
eine Benutzerinformations-Statistikeinheit (116), die dafür ausgelegt ist, die Benutzer-IDs aller Benutzer in der Dienstregion von der Benutzer-ID-Empfangseinheit zu empfangen, die Benutzer-ID des den Dienst erfordernden versorgten Benutzers durch Statistik gemäß den in der Benutzervorgeschichte-Aufzeichnungseinheit aufgezeichneten Dienstinformationen zu erhalten und die durch Statistik erhaltene Benutzer-ID zu der Benutzerdaten-Sammeleinheit zu senden.

**5.** Informationsausgabesystem, das ein öffentliches Medieninformations-Ausgabesystem nach einem der Ansprüche 1 bis 4 enthält, ferner umfassend:

ein Benutzerdaten-Verwaltungssystem, das dafür ausgelegt ist, Inhaltsinformationen von durch einen Benutzer verwendeten Diensten zu sammeln und aufzuzeichnen und Verhaltenscharakterinformationen des Benutzers bereitzustellen.

**6.** Informationsausgabesystem nach Anspruch 5, wobei das Benutzerdaten-Verwaltungssystem ein Dienstfingerabdrucksystem (120) ist, das Folgendes umfasst:

eine Dienstdaten-Sammeleinheit (121), die dafür ausgelegt ist, Informationen von durch einen Benutzer verwendeten Diensten aufzuzeichnen, wenn der Benutzer verschiedene Dienste verwendet;

eine Datenanalyseeinheit (122), die dafür ausgelegt ist, die von jeder Dienstdaten-Sammeleinheit gemeldeten Informationen von durch den Benutzer verwendeten Diensten zu empfangen, die Verhaltenscharakterinformationen des Benutzers zu analysieren und die analysierten Verhaltenscharakterinformationen zur Speicherung einer Datenspeichereinheit (123) zuzuführen;

die Datenspeichereinheit (123), die dafür ausgelegt ist, die Verhaltenscharakterinformationen des Benutzers zu speichern; und

eine Datenzugriffseinheit (124), die dafür ausgelegt ist, gemäß einer externen Anforderung zum Zugriff auf das Dienstfingerabdrucksystem auf die Datenspeichereinheit zuzugreifen, um die Verhaltenscharakterinformationen des Benutzers zu beschaffen, und die Verhaltenscharakterinformationen des Benutzers gemäß der externen Anforderung zurückzugeben.

**7.** Informationsausgabeverfahren mit den folgenden Schritten:

Sammeln (501) von Benutzer-IDs von Benutzern, die in eine Dienstregion eines öffentlichen Medieninformations-Ausgabesystems (110) eintreten;

Beschaffen (502) von Verhaltenscharakterinformationen, die den Benutzer-IDs entsprechen;

Integrieren (503) der Verhaltenscharakterinformationen aller Benutzer in der Dienstregion in einem bestimmten Zeitraum zu integrierten Verhaltenscharakterinformationen und Auswählen von auszugebenden entsprechenden Informationen von Interesse für die meisten Benutzer gemäß den integrierten Verhaltenscharakterinformationen; und

Ausgeben (504) der ausgewählten Informationen.

**8.** Verfahren nach Anspruch 7, wobei das Verfahren vor dem Beschaffen der Verhaltenscharakterinformationen ferner Folgendes umfasst:

Auswählen von ID-Informationen von Benutzern, die den Dienst erfordern, aus den gesammelten Benutzer-IDs von Benutzern gemäß den Dienstinformationen der Benutzer; und wobei sich das Beschaffen von Verhaltenscharakterinformationen, die den Benutzer-IDs entsprechen, auf das Beschaffen der Verhaltenscharakterinformationen, die den gewählten ID-Informationen der Benutzer, die den Dienst erfordern, entsprechen, bezieht.

**9.** Verfahren nach Anspruch 7, wobei das Sammeln einer Benutzer-ID jedes Benutzers, der in eine Dienstregion eines öffentlichen Medieninformations-Ausgabesystems eintritt, Folgendes umfasst: Senden einer Benutzer-ID durch den Benutzer zu dem öffentlichen Medieninformations-Ausgabesystem und Aufzeichnen der empfangenen Benutzer-ID durch das öffentliche Medieninformations-Ausgabesystem.

**10.** Verfahren nach Anspruch 7, wobei das Sammeln einer Benutzer-ID jedes Benutzers, der in eine Dienstregion eines öffentlichen Medieninformations-Ausgabesystems eintritt, Folgendes umfasst: Sammeln der Benutzer-ID durch ein von dem Benutzer getragenes mobiles Endgerät;

und das Verfahren ferner Folgendes umfasst: Senden der Benutzer-ID durch das mobile Endgerät zu dem öffentlichen Medieninformations-Ausgabesystem, sobald das mobile Endgerät das öffentliche Medieninformations-Ausgabesystem beim Eintritt in die Dienstregion detektiert; und Aufzeichnen der empfangenen Benutzer-ID durch das öffentliche Medieninformations-Ausgabesystem; oder

ferner Folgendes umfasst: Anfordern der Benutzer-ID durch das öffentliche Medieninformations-Ausgabesystem von dem mobilen Endgerät, sobald das öffentliche Medieninformations-Ausgabesystem detektiert, dass das mobile Endgerät in die Dienstregion eintritt; Senden der Benutzer-ID durch das mobile Endgerät als Reaktion auf die Anforderung; und Aufzeichnen der empfangenen Benutzer-ID durch das öffentliche Medieninformations-Ausgabesystem; oder

ferner Folgendes umfasst: Beschaffen der Benutzer-ID, die dem mobilen Endgerät entspricht, und Informieren des öffentlichen Medieninformations-Ausgabesystems der Dienstregion, wenn ein Lokalisierungssystem detektiert, dass das mobile Endgerät in die Dienstregion eintritt; wobei das Lokalisierungssystem Folgendes umfasst: ein GPS-System oder einen Positionsbestimmungsserver.

11. Verfahren nach Anspruch 7, wobei das Integrieren der Verhaltenscharakterinformationen aller Benutzer in der Dienstregion zu integrierten Verhaltenscharakterinformationen Folgendes umfasst:

Durchführen einer Gewichtsintegration an den Verhaltenscharakterinformationen aller Benutzer, um einen integrierten Benutzercharaktervektor zu erhalten, der die Charakterdimensionen aller Benutzer enthält.

**Revendications**

1. Système de transmission publique d'informations multimédia (110), comprenant :

une unité de réception d'ID utilisateur (111), adaptée pour collecter les ID utilisateur d'utilisateurs qui entrent dans une région de service du système de transmission publique d'informations multimédia ;
une unité de collecte de données utilisateur (112), adaptée pour acquérir des informations de caractéristiques de comportement des utilisateurs en fonction des ID utilisateur ;
une unité de commande de lecture (113), adaptée pour intégrer les informations de caractéristiques de comportement de tous les utilisateurs dans la région de service dans une certaine période de temps pour créer des informations de caractéristiques de comportement intégrées, et sélectionner des informations intéressant la plupart des utilisateurs à transmettre à partir des informations mémorisées en fonction des informations de caractéristiques de comportement intégrées ; et
une unité de lecture multimédia (114), adaptée pour transmettre les informations sélectionnées.

2. Système selon la revendication 1, dans lequel l'unité de commande de lecture (113) comprend :

une première unité d'enregistrement d'historique utilisateur (1133), adaptée pour enregistrer des informations d'ID utilisateur et informations de service correspondantes d'un utilisateur desservi qui entre dans la région de service ;
une première unité de statistiques d'informations utilisateur (1132), adaptée pour recevoir les ID utilisateur de tous les utilisateurs dans la région de service et les informations de caractéristiques de comportement correspondantes à partir de l'unité de collecte de données utilisateur, analyser les informations d'ID utilisateur et informations de service correspondantes de l'utilisateur desservi enregistrées dans la première unité d'enregistrement d'historique utilisateur, déterminer le poids de service de tous les utilisateurs dans la région de service, obtenir l'ID utilisateur de l'utilisateur desservi demandant le service par le biais de statistiques en fonction du poids de service, et envoyer l'ID utilisateur de l'utilisateur desservi et les informations de caractéristiques de comportement correspondantes à une unité d'intégration de caractéristiques de comportement (1134) ;
l'unité d'intégration de caractéristiques de comportement (1134), adaptée pour intégrer les informations de caractéristiques de comportement de l'utilisateur desservi pour créer les informations de caractéristiques de comportement intégrées ;
une unité de sélection de contenu de lecture (1135), adaptée pour sélectionner les informations à transmettre à partir des informations mémorisées en fonction des informations de caractéristiques de comportement intégrées et enregistrer les informations sélectionnées dans une unité de liste de contenu (1136) ; et
l'unité de liste de contenu (1136), adaptée pour enregistrer une ID des informations à transmettre et celle des informations transmises.

3. Système selon la revendication 2, dans lequel l'unité de commande de lecture comprend en outre :

une unité de déclenchement de commande (1131), adaptée pour déclencher l'unité de sélection de contenu de lecture afin de lire l'unité de liste de contenu.

4. Système selon la revendication 1, dans lequel le système de transmission publique d'informations multimédia comprend en outre :

une unité d'enregistrement d'historique utilisateur (115), adaptée pour enregistrer des informations d'ID utilisateur et informations de service correspondantes d'utilisateurs desservis qui entrent dans la région de service ; et
une unité de statistiques d'informations utilisateur (116), adaptée pour recevoir les ID utilisateur de tous les utilisateurs dans la région de service à partir de l'unité de réception d'ID utilisateur, obtenir l'ID utilisateur de l'utilisateur desservi demandant le service par le biais de statistiques en fonction des informations de service enregistrées dans l'unité d'enregistrement d'historique utilisateur, et envoyer l'ID utilisateur obtenue par le biais de statistiques à l'unité de collecte de données utilisateur.

**5.** Système de transmission d'informations comportant un système de transmission publique d'informations multimédia selon l'une quelconque des revendications 1 à 4, comprenant en outre :

un système de gestion de données utilisateur, adapté pour collecter et enregistrer des informations de contenu de services utilisés par un utilisateur, et fournir des informations de caractéristiques de comportement de l'utilisateur.

**6.** Système de transmission d'informations selon la revendication 5, dans lequel le système de gestion de données utilisateur est un système d'empreinte digitale de service (120) qui comprend :

une unité de collecte de données de service (121), adaptée pour enregistrer des informations de services utilisés par un utilisateur quand l'utilisateur utilise différents services ;
une unité d'analyse de données (122), adaptée pour recevoir les informations de services utilisés par l'utilisateur signalées par chaque unité de collecte de données de service, analyser les informations de caractéristiques de comportement de l'utilisateur, et fournir les informations de caractéristiques de comportement analysées à une unité de mémorisation de données (123) en vue de leur mémorisation ;
l'unité de mémorisation de données (123), adaptée pour mémoriser les informations de caractéristiques de comportement de l'utilisateur ; et
une unité d'accès aux données (124), adaptée pour accéder à l'unité de mémorisation de données afin d'acquérir les informations de caractéristiques de comportement de l'utilisateur en fonction d'une requête externe d'accès au système d'empreinte digitale de service, et renvoyer les informations de caractéristiques de comportement de l'utilisateur en fonction de la requête externe.

**7.** Procédé de transmission d'informations, comprenant :

la collecte (501) des ID utilisateur d'utilisateurs qui entrent dans une région de service d'un système de transmission publique d'informations multimédia (110) ;
l'acquisition (502) d'informations de caractéristiques de comportement correspondant aux ID utilisateur ;
l'intégration (503) des informations de caractéristiques de comportement de tous les utilisateurs dans la région de service dans une certaine période de temps pour créer des informations de caractéristiques de comportement intégrées, et la sélection d'informations correspondantes à transmettre intéressant la plupart des utilisateurs en fonction des informations de caractéristiques de comportement intégrées ; et
la transmission (504) des informations sélectionnées.

**8.** Procédé selon la revendication 7, dans lequel avant l'acquisition d'informations de caractéristiques de comportement, le procédé comprend en outre :

la sélection d'informations d'ID des utilisateurs demandant le service parmi les ID utilisateur collectées des utilisateurs en fonction des informations de service des utilisateurs ; et
dans lequel l'acquisition d'informations de caractéristiques de comportement correspondant aux ID utilisateur se réfère à l'acquisition des informations de caractéristiques de comportement correspondant aux informations d'ID sélectionnées des utilisateurs demandant le service.

**9.** Procédé selon la revendication 7, dans lequel la collecte d'une ID utilisateur de chaque utilisateur qui entre dans une région de service d'un système de transmission publique d'informations multimédia comprend : l'envoi, par l'utilisateur, d'une ID utilisateur au système de transmission publique d'informations multimédia, et l'enregistrement, par le système de transmission publique d'informations multimédia, de l'ID utilisateur reçue.

**10.** Procédé selon la revendication 7, dans lequel la collecte d'une ID utilisateur de chaque utilisateur qui entre dans une région de service d'un système de transmission publique d'informations multimédia comprend : la collecte de l'ID utilisateur par le biais d'un terminal mobile porté par l'utilisateur ;
et le procédé comprend en outre : l'envoi, par le terminal mobile, de l'ID utilisateur au système de transmission publique d'informations multimédia, une fois que le terminal mobile détecte le système de transmission publique d'informations multimédia quand il entre dans la région de service ; et l'enregistrement, par le système de transmission publique d'informations multimédia, de l'ID utilisateur reçue ; ou
comprend en outre : la requête, par le système de transmission publique d'informations multimédia, de l'ID utilisateur auprès du terminal mobile, une fois que le système de transmission publique d'informations multimédia détecte que le terminal mobile entre dans la région de service ; l'envoi, par le terminal mobile, de l'ID utilisateur en réponse à la requête ; et l'enregistrement, par le système de transmission publique d'informations multimédia, de l'ID utilisateur reçue ; ou
comprend en outre : l'acquisition de l'ID utilisateur correspondant au terminal mobile et la notification du système de transmission publique d'informations multimédia de la région de service, quand un système de localisation détecte que le terminal mobile entre dans la région de service, le système de localisation comprenant : un système GPS ou un serveur de positionnement.

11. Procédé selon la revendication 7, dans lequel l'intégration des informations de caractéristiques de comportement de tous les utilisateurs dans la région de service pour créer des informations de caractéristiques de comportement intégrées comprend :

l'exécution d'une intégration pondérée sur les informations de caractéristiques de comportement de tous les utilisateurs afin d'obtenir un vecteur de caractéristiques d'utilisateur intégré comportant les dimensions de caractéristiques de tous les utilisateurs.

110

| Public media information issuing system |
| --- |
| **111** User ID receiving unit |
| **112** User data collecting unit |
| **113** Play controlling unit |
| **114** Media playing unit |

120

| Service fingerprint system |
| --- |
| **124** Data accessing unit |
| **121** Service data collecting unit |
| **122** Data analyzing unit |
| **123** Data storing unit |

Figure 1

113

Play controlling unit

**1131** Control triggering unit

User ID information

**1132** First user information statistics unit

**1133** First user history recording unit

**1134** Behavior character integrating unit

**1135** Playing content selecting unit

**1136** Content list unit

Play content list

History content list

Figure 2

## Figure 3

Public media information issuing system 110'

User ID receiving unit 111'

Second user information statistics unit 116

Play controlling unit 113'

Media playing unit 114'

Second user history recording unit 115

User data collecting unit 112'

Service fingerprint system 120'

Service data collecting unit 121

Data analyzing unit 122

Data storing unit 123

Data accessing unit 124

Figure 3

## Figure 4

Behavior character information

Entertainment | Education | Sports | News | ······ | Others

Music | Film | Variety show

Football | Basketball | Volleyball

Figure 4

```
┌────────────────────────────────────────────────────┐   501
│   Collect the user ID of each user who enters into the service   │
│      region of the public media information issuing system       │
└────────────────────────────────────────────────────┘
                           │
                           ▼
┌────────────────────────────────────────────────────┐   502
│   Acquire the behavior character information corresponding       │
│                      to the user ID                              │
└────────────────────────────────────────────────────┘
                           │
                           ▼
┌────────────────────────────────────────────────────┐   503
│   Integrate the behavior character information, and select       │
│   the corresponding information to be issued according to        │
│        the integrated behavior character information             │
└────────────────────────────────────────────────────┘
                           │
                           ▼
┌────────────────────────────────────────────────────┐   504
│     Issue, by the media playing unit, the corresponding          │
│  information under the control of the play controlling unit, so   │
│   as to play the information via playing terminals in the form    │
│            of broadcasting and stream media                      │
└────────────────────────────────────────────────────┘
```

Figure 5

**EP 1 971 075 B1**

**REFERENCES CITED IN THE DESCRIPTION**

**Patent documents cited in the description**

- EP 1199899 A1